# EUROPEAN PATENT APPLICATION

(11) **EP 4 641 653 A1**
(43) Date of publication of application: **29.10.2025**
(21) Application number: 24863200.2
(22) Date of filing: 05.09.2024
(51) Int. Cl.: H01M 4/13, H01M 4/133, H01M 4/134, H01M 4/587, H01M 4/38, H01M 4/48, H01M 4/46, H01M 4/62, H01M 10/052

(54) **NEGATIVE ELECTRODE AND LITHIUM SECONDARY BATTERY**

(30) Priority: 06.09.2023 KR 20230118377; 04.09.2024 KR 20240120050
(71) Applicant: LG Energy Solution, Ltd., Seoul 07335 (KR)
(72) Inventor: CHOI, Junghyun, Daejeon 34122 (KR); SHIN, Sun Young, Daejeon 34122 (KR); LEE, Yong Ju, Daejeon 34122 (KR)
(74) Representative: Hoffmann Eitle
(86) International application number: PCT/KR2024/013369
(87) International publication number: WO 2025/053621

(57) **Abstract**

The present invention relates to a negative electrode for lithium secondary batteries and a lithium secondary battery, the negative electrode comprising: a current collector; a first layer provided on the current collector and including a carbon-based active material; a second layer provided on the first layer and including a silicon-based active material; and a third layer provided on the second layer and including aluminum or an aluminum-containing compound, wherein the thickness of the third layer is greater than 0 but not exceeding 1/20 of the combined thickness of the first and second layers.

## Description

### [Technical Field]

This application claims priority to and the benefit of Korean Patent Application No. 10-2023-0118377 filed in the Korean Intellectual Property Office on September 6, 2023, and Korean Patent Application No. 10-2024-0120050 filed in the Korean Intellectual Property Office on September 4, 2024, the entire contents of which are incorporated herein by reference.

The present invention relates to a negative Electrode and a lithium secondary battery, and a battery module and a battery pack including the same.

### [Background Art]

Recently, along with the rapid spread of electronic devices using batteries, such as mobile phones, laptop computers and electric vehicles, the demand for small, lightweight, and relatively high-capacity secondary batteries are rapidly increasing. In particular, a lithium secondary battery is in the limelight as a driving power source for portable devices because it is lightweight and has a high energy density. Accordingly, research and development efforts to improve performance of a lithium secondary battery are being actively conducted.

In general, a lithium secondary battery includes a positive electrode, a negative electrode, a separator interposed between the positive electrode and the negative electrode, an electrolyte, and the like. In addition, the positive electrode and the negative electrode may be formed with active material layers each including a positive electrode active material and a negative electrode active material on current collectors. In general, for the positive electrode, a lithium-containing metal oxide such as LiCoO₂ and LiMn₂O₄ is used as the positive electrode active material, and for the negative electrode, a carbon-based active material or a silicon-based active material that does not contain lithium is used as the negative electrode active material.

Among the negative electrode active materials, the silicon-based active material is attracting attention as a high-capacity secondary battery material in that it has higher capacity than the carbon-based active material. However, silicon-based active materials have the disadvantages of poor service life characteristics and swelling characteristics due to side reactions with an electrolytic solution. Accordingly, it is needed to develop a technique that uses silicon-based active materials while minimizing the above-described disadvantages.

### [Detailed Description of the Invention]

### [Technical Problem]

The present invention relates to a negative electrode for a lithium secondary battery, which enables provision of a high-capacity battery by using a silicon-based active material as a negative electrode active material, while addressing the aforementioned disadvantages of the silicon-based active material, and to a lithium secondary battery including the negative electrode.

### [Technical Solution]

An exemplary embodiment of the present invention provides a negative electrode for a lithium secondary battery, including: a current collector; a first layer including a carbon-based active material provided on the current collector; a second layer provided on the first layer and including a silicon-based active material; and a third layer provided on the second layer and including aluminum or an aluminum-containing compound, wherein a thickness of the third layer is greater than 0 and equal to or less than 1/20 of a sum of thicknesses of the first and second layers.

An exemplary embodiment of the present invention provides a lithium secondary battery including the negative electrode for a lithium secondary battery according to the exemplary embodiment described above, a separator, and a positive electrode, wherein the third layer of the negative electrode is provided facing the separator.

An exemplary embodiment of the present invention provides a battery module including the lithium secondary battery according to the exemplary embodiment described above.

An exemplary embodiment of the present invention provides a battery pack including the lithium secondary battery according to the exemplary embodiment described above.

An exemplary embodiment of the present invention provides a battery pack including the battery module according to the exemplary embodiment described above.

### [Advantageous Effects]

A negative electrode for a lithium secondary battery according to an exemplary embodiment of the present invention includes a silicon-based active material, and in this case, includes the silicon-based active material in an upper layer of a two-layered active material layer structure, and also arranges a layer including aluminum or an aluminum-containing compound on a surface facing a separator, thereby significantly improving cycle, service life, and swelling characteristics. Specifically, an inorganic layer containing relatively hard aluminum can suppress changes in volume of an active material layer containing a silicon-based active material with high swelling, thereby improving cycle, service life, and swelling.

### [Best Mode]

Hereinafter, the present specification will be described in more detail.

In the present specification, when a part is referred to as "including" a certain component, it means that the part can further include another component, not excluding another component, unless explicitly described to the contrary.

Throughout the present specification, when a member is referred to as being "on" another member, the member can be in direct contact with another member or an intervening member may also be present.

It should be understood that the terms or words used throughout the specification should not be construed as being limited to their ordinary or dictionary meanings, but construed as having meanings and concepts consistent with the technical idea of the present invention, based on the principle that an inventor may properly define the concepts of the words or terms to best explain the invention.

As used herein, the singular forms "a", "an" and "the" are intended to include the plural forms as well, unless the context clearly indicates otherwise.

In the present specification, descriptions referred to simply as "negative electrode active material layer" without expressions such as first and second may be applied to both the first and second layers.

Hereinafter, preferred exemplary embodiments of the present invention will be described in detail. However, it should be understood that the exemplary embodiments of the present invention may be modified in various forms and the scope of the present invention is not limited to the exemplary embodiments described below.

### <Negative Electrode>

According to an exemplary embodiment of the present invention, a negative electrode for a lithium secondary battery includes: a current collector; a first layer including a carbon-based active material provided on the current collector; and a second layer provided on the first layer and including a silicon-based active material. In addition to this, the negative electrode for a lithium secondary battery includes a third layer provided on the second layer and including aluminum or an aluminum-containing compound, and a thickness of the third layer is greater than 0 and equal to or less than 1/20 of a sum of thicknesses of the first and second layers.

According to the above exemplary embodiment, there is an advantage in that a detachment phenomenon between the current collector and the active material due to the silicon-based active material with a large volume change can be suppressed by the stacked structure of the first layer and the second layer. By additionally stacking the third layer on the surface of the stacked structure including the active material, the relatively hard aluminum-containing inorganic layer suppresses changes in volume of the active material layer including the silicon-based active material with high swelling, thereby improving the battery service life and swelling characteristics.

According to an exemplary embodiment, the first layer includes a carbon-based active material as an active material, and does not include a silicon-based active material. According to an example, the carbon-based active material may be graphite, and the graphite may be natural graphite, artificial graphite, or a mixture thereof. A content of the carbon-based active material of the first layer may be 80 to 100 parts by weight, for example, 90 to 100 parts by weight, or 95 to 100 parts by weight, based on 100 parts by weight of an active material in the first layer.

According to an exemplary embodiment, the silicon-based active material of the second layer includes at least one of silicon (Si), a silicon oxide, a metal-doped silicon oxide, a silicon-carbon composite, and a silicon-metal alloy. A content of the silicon-based active material of the second layer may be 0.1 to 40 parts by weight, for example, 1 to 20 parts by weight or 5 to 12 parts by weight, based on 100 parts by weight of an active material in the second layer.

When the content of the silicon-based active material of the second layer falls within the above range based on 100 parts by weight of the active material of the second layer, the capacity of the negative electrode can be increased, and the electrode can be manufactured thinner, leading to improved service life and swelling characteristics of the battery. Specifically, when the content of the silicon-based active material of the second layer is 0.1 part by weight or more, it is advantageous for increasing the capacity of the negative electrode, and the negative electrode can be formed relatively thinner to implement excellent capacity, leading to improved service life and swelling characteristics. In addition, when the content of the silicon-based active material of the second layer is 40 parts by weight or less, the Si content is not too high and is within an appropriate range, so that the swelling characteristics of Si are improved, leading to improved service life and swelling characteristics.

As needed, the second layer may further include a carbon-based active material. The carbon-based active material of the second layer may be natural graphite, artificial graphite, or a mixture thereof. A content of the carbon-based active material of the second layer may be 60 to 99.9 parts by weight based on 100 parts by weight of the active material in the second layer.

The silicon-based active material may be an active material including SiOₓ (0 ≤ x < 2), and the active material may be a silicon-based composite particle including SiOₓ (0 < x < 2) and a pore.

The active material including SiOₓ (0 ≤ x < 2) may be a silicon oxide particle including SiOₓ (0 < x < 2) and a pore.

The SiOₓ (0 < x < 2) corresponds to a matrix in the silicon oxide particle. The SiOₓ (0 < x < 2) may be in a form of including Si and SiO₂, and the Si may form a phase. That is, x corresponds to a ratio of numbers of O to Si included in the SiOₓ (0 < x < 2). When the silicon oxide particles include the SiOₓ (0 < x < 2), a discharge capacity of a secondary battery can be improved.

The silicon oxide particle may further include at least one of a Mg compound and a Li compound. The Mg compound and the Li compound may correspond to a matrix in the silicon oxide particle.

The Mg compound and/or the Li compound may be present in the SiOₓ (0 < x < 2) and/or on a surface of the SiOₓ (0 < x < 2). The initial efficiency of the battery can be improved by the Mg compound and/or the Li compound.

The Mg compound may include at least one selected from the group consisting of Mg silicate, Mg silicide, and Mg oxide. The Mg silicate may include at least one of Mg₂SiO₄ and MgSiO₃. The Mg silicide may include Mg₂Si. The Mg oxide may include MgO.

In an exemplary embodiment of the present specification, the Mg element may be included in an amount of 0.1 to 20 wt% or 0.1 to 15 wt% based on 100 wt% of the total silicon oxide particles. Specifically, the Mg element may be included in an amount of 0.5 to 10 wt% or 0.8 to 10 wt%. When the above range is satisfied, the Mg compound can be included in an appropriate content in the silicon oxide particles, so the volume change of the silicon oxide particles during charging and discharging of the battery can be easily suppressed, and the discharge capacity and initial efficiency of the battery can be improved.

The Li compound may include at least one selected from the group consisting of Li silicate, Li silicide, and Li oxide. The Li silicate may include at least one of Li₂SiO₃, Li₄SiO₄ and Li₂Si₂O₅. The Li silicide may include Li₇Si₂. The Li oxide may include Li₂O.

In an exemplary embodiment of the present invention, the Li compound may include a form of lithium silicate. The lithium silicate is represented by LiₐSi_{b}O_{c} (2 ≤ a ≤ 4, 0 < b ≤ 2, 2 ≤ c ≤ 5) and may be divided into crystalline lithium silicate and amorphous lithium silicate. The crystalline lithium silicate may be present in the silicon oxide particle in a form of at least one lithium silicate selected from the group consisting of Li₂SiO₃, Li₄SiO₄, and Li₂Si₂O₅, and the amorphous lithium silicate may be in a form of LiₐSi_{b}O_{c} (2 ≤ a ≤ 4, 0 < b ≤ 2, 2 ≤ c ≤ 5). However, no such limitation is intended.

In an exemplary embodiment of the present specification, the Li element may be included in an amount of 0.1 to 20 wt% or 0.1 to 15 wt% based on 100 wt% of the total silicon oxide particles. Specifically, the Li element may be included in an amount of 0.5 to 10 wt%, and more specifically, 0.5 to 10 wt%. When the above range is satisfied, the Li compound can be included in an appropriate content in the silicon oxide particles, so the volume change of the negative electrode active material during charging and discharging of the battery can be easily suppressed, and the discharge capacity and initial efficiency of the battery can be improved.

The content of the Mg element or Li element can be confirmed through ICP analysis. For the ICP analysis, a predetermined amount (about 0.01 g) of a negative electrode active material is precisely aliquoted, transferred to a platinum crucible, and completely decomposed on a hot plate by adding nitric acid, hydrofluoric acid, and sulfuric acid thereto. Then, by using an inductively coupled plasma atomic emission spectrometer (ICP-AES, Perkin-Elmer 7300), a reference calibration curve is obtained by measuring the intensity of a standard liquid, which has been prepared using a standard solution (5 mg/kg), at an intrinsic wavelength of the Mg element or Li element. Subsequently, a pre-treated sample solution and a blank sample are introduced into the spectrometer, and by measuring the intensity of each component to calculate an actual intensity, calculating the concentration of each component based on the obtained calibration curve, and then performing a conversion such that the sum of the calculated concentrations of the components is equal to a theoretical value, the Mg element or Li element content in the prepared silicon oxide particles can be analyzed.

In an exemplary embodiment of the present invention, the silicon oxide particle may include a further metal atom. The metal atom may be present in the silicon oxide particle in the form of at least one of a metal atom, a metal silicate, a metal silicide, and a metal oxide. The metal atom may include at least one selected from the group consisting of Mg, Li, Al and Ca. Accordingly, initial efficiency of the negative electrode active material may be improved.

In an exemplary embodiment of the present invention, a carbon layer is provided on at least a portion of a surface of the silicon oxide particle. In this case, the carbon layer may be coated on at least a portion of the surface, i.e., may be partially coated on the surface of the particle, or may be coated on the entire surface of the particle. Conductivity is imparted to the negative electrode active material by the carbon layer, so that the initial efficiency, service life characteristics, and battery capacity characteristics of a secondary battery can be improved.

In an exemplary embodiment of the present invention, the carbon layer includes amorphous carbon. Further, the carbon layer may further include crystalline carbon.

The crystalline carbon may further improve conductivity of the negative electrode active material. The crystalline carbon may include at least one selected from the group consisting of fullerene, carbon nanotubes, and graphene.

The amorphous carbon may appropriately maintain the strength of the carbon layer to suppress expansion of the silicon-based particle. The amorphous carbon may be a carbide of at least one substance selected from the group consisting of tar, pitch, and other organic materials, or may be a carbon-based material formed by using hydrocarbon as a source of chemical vapor deposition.

The carbide of the other organic materials may be a carbide of sucrose, glucose, galactose, fructose, lactose, mannose, ribose, aldohexose, ketohexose, and a carbide of an organic material selected from combinations thereof.

The hydrocarbon may be a substituted or unsubstituted aliphatic or alicyclic hydrocarbon or a substituted or unsubstituted aromatic hydrocarbon. The aliphatic or alicyclic hydrocarbon of the substituted or unsubstituted aliphatic or alicyclic hydrocarbon may be methane, ethane, ethylene, acetylene, propane, butane, butene, pentane, isobutane, hexane or the like. The aromatic hydrocarbon of the substituted or unsubstituted aromatic hydrocarbon may be benzene, toluene, xylene, styrene, ethylbenzene, diphenylmethane, naphthalene, phenol, cresol, nitrobenzene, chlorobenzene, indene, coumarone, pyridine, anthracene, phenanthrene, or the like.

In an exemplary embodiment of the present invention, the carbon layer may be an amorphous carbon layer.

In an exemplary embodiment of the present invention, the carbon layer may be included in an amount of 0.1 to 50 parts by weight, 0.1 to 30 parts by weight, or 0.1 to 20 parts by weight based on 100 parts by weight of the total silicon-based particles. More specifically, the carbon layer may be included in an amount of 0.5 to 15 parts by weight, 1 to 10 parts by weight, or 1 to 5 parts by weight. When the above range is satisfied, reduction in capacity and efficiency of the negative electrode active material can be prevented.

In an exemplary embodiment of the present invention, a thickness of the carbon layer may be 1 to 500 nm, and specifically 5 to 300 nm. When the above range is satisfied, the conductivity of the negative electrode active material is improved, the changes in volume of the negative electrode active material are easily suppressed, and the side reaction between the electrolytic solution and the negative electrode active material is suppressed, leading to improved initial efficiency and/or service life of the battery.

Specifically, the carbon layer may be formed by chemical vapor deposition (CVD) using at least one hydrocarbon gas selected from the group consisting of methane, ethane and acetylene.

In the present invention, the crystallinity of the carbon layer can be confirmed by calculating the D/G band ratio according to Raman spectroscopy. Specifically, measurements can be made using a Renishaw 2000 Raman microscope system and 532 nm laser excitation, and using a 100x optical lens with a low laser power density and an exposure time of 30 seconds in order to avoid a laser heat effect. In order to reduce a deviation depending on position, a total of 25 points can be determined for a region of 5 µm x 5 µm, and fitted using the Lorentzian function. Thereafter, average values of the D band and G band can be calculated.

The silicon-based active material may be a silicon-carbon composite, which may be a Si/C-based active material.

In the present specification, the silicon-carbon composite is a composite of Si and C, and is distinguished from silicon carbide expressed as SiC.

The silicon-carbon composite may be a composite of silicon, graphite, etc., and may form a structure in which a core resulting from compositing of silicon with graphite, etc. is surrounded by graphene, amorphous carbon or the like. In the silicon-carbon composite, silicon may be nano silicon.

According to an exemplary embodiment, the silicon-carbon composite includes porous carbon-based particles and silicon present on surfaces or in internal pores of the porous carbon-based particles.

According to an exemplary embodiment, the silicon-carbon composite may have a pore volume 0.005 to 0.03 cm³/g as measured by a BET method, and a pore size of 10 to 20 nm as measured by the BET method. The silicon-carbon composite may have a pore volume of 0.005 to 0.03 cm³/g as measured by a mercury penetration method (Hg porosimeter).

According to an exemplary embodiment, the silicon-carbon composite may be manufactured by a method including a step of forming silicon on surfaces and in internal pores of porous carbon-based particles.

The porous carbon-based particles may be manufactured using a method known in the art, and as an example, may be obtained by a method of carbonizing an organic material, such as a petroleum-based material or a polymer, or chemically treating a material found in nature, such as palm tree shells, and then carbonizing the same. As another example, the porous carbon-based particles may be obtained by a method including a step of etching carbon-based particles including internal pores to expand the internal pores of the carbon-based particles.

The step of expanding the internal pores of the carbon-based particles may be performed in a nitrogen (N₂) atmosphere, an oxygen (O₂) atmosphere, or an air atmosphere. Specifically, a flow rate of the oxygen (O₂) or an air containing the oxygen may be controlled to 0.1 to 10 L/min.

The step of expanding the internal pores of the carbon-based particles may be performed within a temperature range of from 400°C to 1200°C for 30 minutes to 4 hours.

Pore characteristics of the obtained porous carbon-based particles may vary depending on conditions for expanding the internal pores of the carbon-based particles.

The step of forming silicon may be performed using a chemical vapor deposition method. In this case, silicon nanoparticles are deposited on the surfaces and/or in the internal pores of the carbon-based particles with expanded internal pores, so that silicon in the form of a film, an island, or a combination thereof may be formed.

The silicon nanoparticles may be crystalline, quasi-crystalline, amorphous, or a combination thereof.

The silicon-based active material may be a silicon-metal alloy. For example, the silicon-metal alloy (Si-alloy) may be an alloy of Si with one or more metals selected from the group consisting of Zn, Al, Mn, Ti, Fe, and Sn, and may include, but is not limited to, a solid solution, an intermetallic compound, a eutectic alloy, etc. with these.

In the present specification, an average particle diameter (D50) may be defined as a particle diameter corresponding to 50% of the cumulative volume in the particle diameter distribution curve of particles. The average particle diameter (D50) may be measured using, for example, a laser diffraction method. In the laser diffraction method, in general, particle diameters ranging from a submicron region to several millimeters can be measured, and results with high reproducibility and high resolvability can be obtained.

An average particle diameter (D50) of the silicon-based active material may be 1 to 10 µm. When the above range is satisfied, the structural stability of the active material is ensured during charging and discharging, a problem of the level of volume expansion/contraction increasing as the particle diameter becomes excessively large can be prevented, and a problem of the initial efficiency being reduced when the particle diameter is excessively small can also be prevented.

The first layer and the second layer may each additionally include a binder and a conductive material, and may further include a thickener and/or a conductive material as needed.

The first layer and the second layer may be formed by applying a negative electrode slurry including the aforementioned active material, binder, thickener, and/or conductive material to at least one surface of a current collector, followed by drying and roll-pressing. The first layer and the second layer may be formed sequentially on the current collector. Thicknesses of the first layer and the second layer may be the same, or a ratio of the thickness of the second layer to the thickness of the first layer may be 0.7 to 1.3.

The negative electrode slurry may further include an additional negative electrode active material.

As the additional negative electrode active material, a compound capable of reversible intercalation and deintercalation of lithium may be used. Specific examples include a carbonaceous material such as artificial graphite, natural graphite, graphitized carbon fiber, and amorphous carbon; a metallic substance capable of alloying with lithium, such as Si, Al, Sn, Pb, Zn, Bi, In, Mg, Ga, Cd, a Si alloy, a Sn alloy, or an Al alloy; a metal oxide capable of doping and dedoping lithium, such as SiO_{β} (0 < β < 2), SnO₂, vanadium oxide, lithium titanium oxide, and lithium vanadium oxide; or a composite including the metallic substance and the carbonaceous material, such as a Si-C composite or a Sn-C composite, and any one thereof or a mixture of two or more thereof may be used. In addition, a metal lithium thin film may be used as the negative electrode active material. In addition, both low-crystalline carbon and high-crystalline carbon may be used as the carbon material. Representative examples of the low-crystalline carbon include soft carbon and hard carbon, and representative examples of the high-crystalline carbon include amorphous, platy, scaly, spherical or fibrous natural graphite or artificial graphite, kish graphite, pyrolytic carbon, mesophase pitch based carbon fiber, meso-carbon microbeads, mesophase pitches, and high-temperature fired carbon such as petroleum or coal tar pitch-derived cokes.

According to an exemplary embodiment of the present invention, the negative electrode slurry may have pH of 7 to 11 at 25°C. When pH of the negative electrode slurry falls within the above range, the rheological properties of the slurry are stabilized. On the other hand, when pH of the negative electrode slurry is less than 7 or exceeds 11, carboxymethylcellulose (CMC) used as a thickener is decomposed, resulting in a reduction in viscosity of the slurry and a decrease in dispersion degree of the active material included in the slurry.

The negative electrode current collector is not particularly limited as long as it has conductivity without causing a chemical change in the battery. For example, for the current collector, copper, stainless steel, aluminum, nickel, titanium, fired carbon, aluminum or stainless steel each surface-treated with carbon, nickel, titanium, silver, or the like, or the like may be used. Specifically, transition metals that adsorb carbon well, such as copper and nickel, may be used for the current collector. A thickness of the current collector may be 6 to 20 µm. However, the thickness of the current collector is not limited thereto.

The binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-mentioned materials in which a hydrogen is substituted with Li, Na, Ca, etc., and may also include various copolymers thereof.

The conductive material is not particularly limited as long as it has conductivity without causing a chemical change in the battery, and for example, graphite such as natural graphite or artificial graphite; carbon black such as acetylene black, Ketjen black, channel black, furnace black, lamp black, and thermal black; a conductive fiber such as a carbon fiber and a metal fiber; a conductive tube such as a carbon nanotube; metal powders such as fluorocarbon, aluminum, and nickel powder; a conductive whisker such as zinc oxide and potassium titanate; a conductive metal oxide such as titanium oxide; a conductive material such as polyphenylene derivative, and the like may be used.

The thickener may be carboxymethylcellulose (CMC), but is not limited thereto, and thickeners used in the art may be appropriately adopted.

In an exemplary embodiment of the present invention, the entire negative electrode active materials included in the negative electrode slurry may be included in an amount of 60 to 99 parts by weight, and specifically 70 to 98 parts by weight based on 100 parts by weight of the total solid content of the negative electrode slurry.

In an exemplary embodiment of the present invention, the binder may be included in an amount of 0.5 to 30 parts by weight, and specifically 1 to 20 parts by weight based on 100 parts by weight of the total solid content of the negative electrode slurry.

In an exemplary embodiment of the present invention, the conductive material may be included in an amount of 0.0.1 to 25 parts by weight, and specifically 0.05 to 20 parts by weight based on 100 parts by weight of the total solid content of the negative electrode slurry.

In an exemplary embodiment of the present invention, the thickener may be included in an amount of 0.5 to 25 parts by weight, specifically 0.5 to 20 parts by weight, and more specifically 1 to 20 parts by weight based on 100 parts by weight of the total solid content of the negative electrode slurry.

The negative electrode slurry according to an exemplary embodiment of the present invention may further include a solvent for negative electrode slurry formation. Specifically, the solvent for negative electrode slurry formation may include at least one selected from the group consisting of distilled water, ethanol, methanol, and isopropyl alcohol, and specifically, distilled water, in terms of facilitating dispersion of components.

In an exemplary embodiment of the present invention, a solid content of the negative electrode slurry may be 20 to 75 parts by weight, and specifically 30 to 70 parts by weight based on 100 parts by weight of the total negative electrode slurry.

In the present invention, the third layer includes aluminum or an aluminum-containing compound, and a thickness of the third layer is greater than 0 and equal to or less than 1/20 of a sum of the thicknesses of the first and second layers. The thickness of the third layer refers to a thickness of the third layer in a portion where the third layer is present. In other words, the third layer may entirely cover one surface of the second layer, but may cover only a portion of one surface of the second layer, in which case the thickness of the third layer refers to a thickness of a region where the third layer covers the second layer. The thickness and thickness ratio of each layer may be obtained by measuring the thickness using a SEM of the electrode cross-section. The measurement of the thicknesses may be performed at any one of the following points in time: before impregnation with an electrolytic solution, after the impregnation, or after cycling of the battery. The effect of the present invention can be achieved when the thickness ratio calculated from the thicknesses measured at any one point in time falls within the range of the present invention. In the case of the above material, the third layer containing relatively hard aluminum has the advantage of improving cycle, service life, and swelling characteristics by suppressing changes in volume of the active material layer containing a silicon-based active material with high swelling, and when the above thickness range is satisfied, there is the advantage of suppressing volume expansion without lowering the conductivity of the negative electrode.

According to an exemplary embodiment, the third layer is provided to cover the second layer partially or entirely. When the third layer covers the second layer partially, it may cover 30% or more, 50% or more, 70% or more, or 90% or more of the second layer.

According to an exemplary embodiment, the third layer may further include a binder in addition to aluminum or an aluminum-containing compound. In this case, the binder may be included in an amount of 1 to 20 parts by weight, for example, 5 to 15 parts by weight, per 100 parts by weight of the third layer.

According to an exemplary embodiment, the third layer may be manufactured by the following method. First, a dispersion is prepared by mixing and dispersing at least one of aluminum and an aluminum-containing compound with a solvent and a polymer binder. Then, the dispersion is applied and coated on the second layer of the stacked structure of the first layer and the second layer. Here, the stacked structure of the first layer and the second layer may be in a state where rolling has been completed.

A drying process may be additionally performed as needed. The dispersion of aluminum or an aluminum-containing compound according to an exemplary embodiment of the present invention may further include a solvent for dispersion formation. Specifically, the solvent for dispersion formation may include at least one selected from the group consisting of distilled water, ethanol, methanol, and isopropyl alcohol, and specifically, distilled water, in terms of facilitating dispersion of components.

The polymer binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-mentioned materials in which a hydrogen is substituted with Li, Na, Ca, etc., and may also include various copolymers thereof.

According to an exemplary embodiment, the aluminum-containing compound of the third layer includes at least one of aluminum oxide and Al(OH)₃.

According to an exemplary embodiment, based on 100 parts by weight of the third layer composition, a content of the aluminum or aluminum-containing compound is 90 to 100 parts by weight, for example, 90 to 95 parts by weight.

When the above range is satisfied, the service life and swelling characteristics of the battery can be improved. Specifically, when the content of aluminum or aluminum-containing compound in the third layer falls within the above range, the content of polymer binder in the third layer composition does not increase beyond 10 parts by weight, so that a phenomenon of the polymer binder acting as a resistive layer and thus electrical conductivity being reduced is prevented, leading to improved service life characteristics.

### <Secondary Battery>

An exemplary embodiment of the present invention provides a lithium secondary battery including the negative electrode according to the aforementioned exemplary embodiments; a separator; and a positive electrode, wherein the inorganic layer of the negative electrode is provided facing the separator. In this case, the third layer of the negative electrode is provided facing the separator. When the third layer comes into contact with the separator, the bonding force with the separator increases, making it more advantageous for battery manufacturing.

According to an exemplary embodiment of the present application, the positive electrode may include a positive electrode current collector and a positive electrode active material layer formed on the positive electrode current collector and including the positive electrode active material.

In the positive electrode, the positive electrode current collector is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector may typically have a thickness of 3 to 500 µm, and a surface of the current collector may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

The positive electrode active material layer may include a positive electrode conductive material and a positive electrode binder together with the positive electrode active material described above.

In this case, the positive electrode conductive material is used to impart conductivity to the electrode, and can be used without particular limitation as long as the positive electrode conductive material has electronic conductivity without causing a chemical change in a battery to be constituted. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesive force between the positive electrode active material and the positive electrode current collector. Specific examples may include polyvinylidenefluoride (PVDF), polyvinylidenefluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene monomer (EPDM), sulfonated-EPDM, styrene butadiene rubber (SBR), fluoro rubber, or various copolymers thereof, and the like, and any one thereof or a mixture of two or more thereof may be used.

The positive electrode binder may be included in an amount of 0.1 part by weight or more and 50 parts by weight or less, for example, preferably 0.3 part by weight or more and 35 parts by weight or less, and more preferably 0.5 part by weight or more and 20 parts by weight or less on the basis of 100 parts by weight of the positive electrode active material layer.

The conductive material included in the positive electrode active material layer is used to impart conductivity to the electrode, and can be used without particular limitation as long as the conductive material has electronic conductivity without causing a chemical change in a battery. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

Specifically, in an exemplary embodiment, the conductive material may include one or more of a single-walled carbon nanotube (SWCNT) and a multi-walled carbon nanotube (MWCNT). The conductive material may be included in an amount of 0.1 part by weight or more and 2 parts by weight or less, for example, preferably 0.3 part by weight or more and 1.5 parts by weight or less, and more preferably 0.5 part by weight or more and 1.2 parts by weight or less on the basis of 100 parts by weight of the composition for a positive electrode active material layer.

A secondary battery according to an exemplary embodiment of the present invention may include the negative electrode, the positive electrode, and a separator interposed between the positive electrode and the negative electrode, and may further include an electrolytic solution.

The separator serves to separate the negative electrode and the positive electrode and to provide a migration path of lithium ions, in which any separator may be used as the separator without particular limitation as long as it is typically used in a secondary battery, and particularly, a separator having high moisture-retention ability for an electrolytic solution as well as a low resistance to migration of electrolytic solution ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a stacked structure having two or more layers thereof may be used. In addition, a usual porous non-woven fabric, for example, a non-woven fabric formed of high melting point glass fibers, polyethylene terephthalate fibers, or the like may be used. Furthermore, a coated separator including a ceramic component or polymer material may be used so as to secure heat resistance or mechanical strength, and a separator having a single layer or multilayer structure may be selectively used.

According to an exemplary embodiment of the present invention, the separator may be a safety reinforced separator (SRS).

Examples of the electrolytic solution may include an organic liquid electrolyte, an inorganic liquid electrolyte, a solid polymer electrolyte, a gel-type polymer electrolyte, a solid inorganic electrolyte, a molten-type inorganic electrolyte and the like that may be used in manufacturing a lithium secondary battery, but are not limited thereto.

Specifically, the electrolytic solution may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimetoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate or diethyl carbonate, in a suitable ratio and used, an electrolytic solution with high electric conductivity may be prepared, and therefore, such a combined use may be more preferable.

A lithium salt may be used as the metal salt, and the lithium salt is a material that is readily soluble in the non-aqueous electrolytic solution, in which, for example, one or more selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolytic solution for the purpose of improving service life characteristics of the battery, suppressing a decrease in battery capacity, improving discharge capacity of the battery, and the like, in addition to the above-described components of the electrolytic solution.

According to another exemplary embodiment of the present invention, a battery module including the lithium secondary battery as a unit cell, and a battery pack including the same are provided.

According to another exemplary embodiment of the present invention, a battery pack including the lithium secondary battery is provided.

According to another exemplary embodiment of the present invention, a battery pack including the battery module is provided.

Since the battery module and the battery pack include the lithium secondary battery having high capacity, high rate capability, and high cycle characteristics, the battery module and the battery pack may be used as a power source of a medium and large sized device selected from the group consisting of an electric vehicle, a hybrid electric vehicle, a plug-in hybrid electric vehicle, and a power storage system.

### Mode for Invention

### <Examples and Comparative Examples>

### Example 1

A composition for forming a first layer was prepared, including, on the basis of 100 parts by weight of the composition for forming a first layer, 96.3 parts by weight of graphite, 2.55 parts by weight of SBR (styrene-butadiene rubber) as a binder, and 1 part by weight of CMC (carboxymethyl cellulose), and further including a CNT pre-dispersion including 0.1 part by weight of a dispersant and 0.05 part by weight of single-walled CNT. In this case, the graphite was prepared with a size of D50 = 17 µm by an airflow pulverization method. A copper foil having a thickness of 15 µm was coated with the composition for forming a first layer so as to have a thickness of 50 µm in a dry state.

A composition for forming a second layer was prepared, including, on the basis of 100 parts by weight of the composition for forming a second layer, 97.7 parts by weight of graphite (90 parts by weight based on 100 parts by weight of the negative electrode active material) and a silicon oxide active material coated with carbon by methane CVD (10 parts by weight based on 100 parts by weight of the negative electrode active material), 1.15 parts by weight of SBR (styrene-butadiene rubber) as a binder, and 1 part by weight of CMC (carboxymethyl cellulose), and further including a CNT pre-dispersion including 0.1 part by weight of a dispersant and 0.05 part by weight of single-walled CNT. In this case, the carbon-coated silicon oxide active material was prepared with a size of D 50 = 6 µm, and the graphite was prepared with a size of D50 = 17 µm by an airflow pulverization method. The composition for forming a second layer was coated on the first layer so as to have a thickness of 100 µm in a dry state.

The negative electrode coated with the first and second layers was rolled to have an electrode thickness of 60 µm. Next, alumina (Al₂O₃) as an inorganic material, SBR as a binder, and CMC were mixed in a ratio of 90:6:4, and dissolved in water, and then the inorganic particles were pulverized and dispersed for 12 hours or longer using a ball mill method to prepare an aluminum-containing compound dispersion. The dispersion was applied onto the second layer of the negative electrode coated with the first and second layers, resulting in a negative electrode in which the sum of the thicknesses of the first to third layers in a dry state was 62 µm.

### Example 2

A negative electrode was prepared in the same manner as in Example 1, except that a Mg-doped carbon-coated silicon oxide active material was used instead of the carbon-coated silicon oxide active material.

### Example 3

A negative electrode was prepared in the same manner as in Example 1, except that a Li-doped carbon-coated silicon oxide active material was used instead of the carbon-coated silicon oxide active material.

### Example 4

A negative electrode was prepared in the same manner as in Example 1, except that a silicon-carbon composite (Si/C) was used instead of the carbon-coated silicon oxide active material.

### Example 5

A negative electrode was prepared in the same manner as in Example 1, except that a Si-alloy (Si₆Cu₃Sn₁) was used instead of the carbon-coated silicon oxide active material.

### Example 6

A negative electrode was prepared in the same manner as in Example 1, except that the sum of the thicknesses of the first to third layers after the third layer was applied was 61 µm.

### Example 7

A negative electrode was prepared in the same manner as in Example 1, except that graphite (50 parts by weight based on 100 parts by weight of the negative electrode active material) and silicon oxide active material coated with carbon by methane CVD (50 parts by weight based on 100 parts by weight of the negative electrode active material) were included based on 100 parts by weight of the negative electrode active material of the second layer.

### Example 8

A negative electrode was prepared in the same manner as in Example 1, except that alumina (Al₂O₃) as an inorganic material, SBR as a binder, and CMC were 50:30:20, based on 100 parts by weight of the third layer composition.

### Comparative Example 1

A negative electrode was prepared in the same manner as in Example 1, except that the third layer was not applied.

### Comparative Example 2

A negative electrode was prepared in the same manner as in Example 2, except that the third layer was not applied.

### Comparative Example 3

A negative electrode was prepared in the same manner as in Example 3, except that the third layer was not applied.

### Comparative Example 4

A negative electrode was prepared in the same manner as in Example 4, except that the third layer was not applied.

### Comparative Example 5

A negative electrode was prepared in the same manner as in Example 5, except that the third layer was not applied.

### Comparative Example 6

A negative electrode was prepared in the same manner as in Example 1, except that the sum of the thicknesses of the first to third layers after the third layer was applied was 65 µm.

### Comparative Example 7

A negative electrode was prepared in the same manner as in Example 2, except that the sum of the thicknesses of the first to third layers after the third layer was applied was 65 µm.

### Comparative Example 8

A negative electrode was prepared in the same manner as in Example 3, except that the sum of the thicknesses of the first to third layers after the third layer was applied was 65 µm.

### Comparative Example 9

A negative electrode was prepared in the same manner as in Example 4, except that the sum of the thicknesses of the first to third layers after the third layer was applied was 65 µm.

### Comparative Example 10

A negative electrode was prepared in the same manner as in Example 5, except that the sum of the thicknesses of the first to third layers after the third layer was applied was 65 µm.

### Comparative Example 11

A negative electrode was prepared in the same manner as in Example 1, except that the sum of the thicknesses of the first to third layers after the third layer was applied was 64.6 µm.

### Experimental Example 1

The negative electrode was dried in a vacuum oven at 130°C for 12 hours.

The prepared negative electrode and a lithium (Li) metal thin film cut into a circular shape of 1.7671 cm² as a positive electrode were used. A porous polyethylene separator was interposed between the positive electrode and the negative electrode, and an electrolytic solution obtained by dissolving vinylene carbonate to 0.5 part by weight in a mixed solution in which ethyl methyl carbonate (EMC) and ethylene carbonate (EC) were mixed in a volume ratio of 7:3, and dissolving LiPF₆ to a concentration of 1 M was injected to prepare a lithium coin half-cell.

The prepared batteries were charged and discharged to evaluate the capacity retention rate and the electrode expansion rate, and the results are shown in Table 1 below.

The charging and discharging were performed at 0.1C for the first cycle and the second cycle, and the charging and discharging were performed at 0.5C from the third cycle to the 49th cycle. At the 50th cycle, the charging and discharging were terminated in a charge state (with lithium contained in the negative electrode).

Charging conditions: CC (constant current)/CV (constant voltage) (5 mV/0.005 C current cut-off)

Discharging conditions: CC (constant current) condition 1.5 V

Based on the results of one charge/discharge cycle, the capacity retention rate was derived by the following calculation. Capacity retention rate (%) = (49th discharge capacity/1st discharge capacity) × 100%

The electrode expansion rate was derived by the following calculation. Electrode expansion rate (%) = (electrode thickness after 50 cycles/initial electrode thickness) × 100%

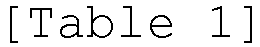

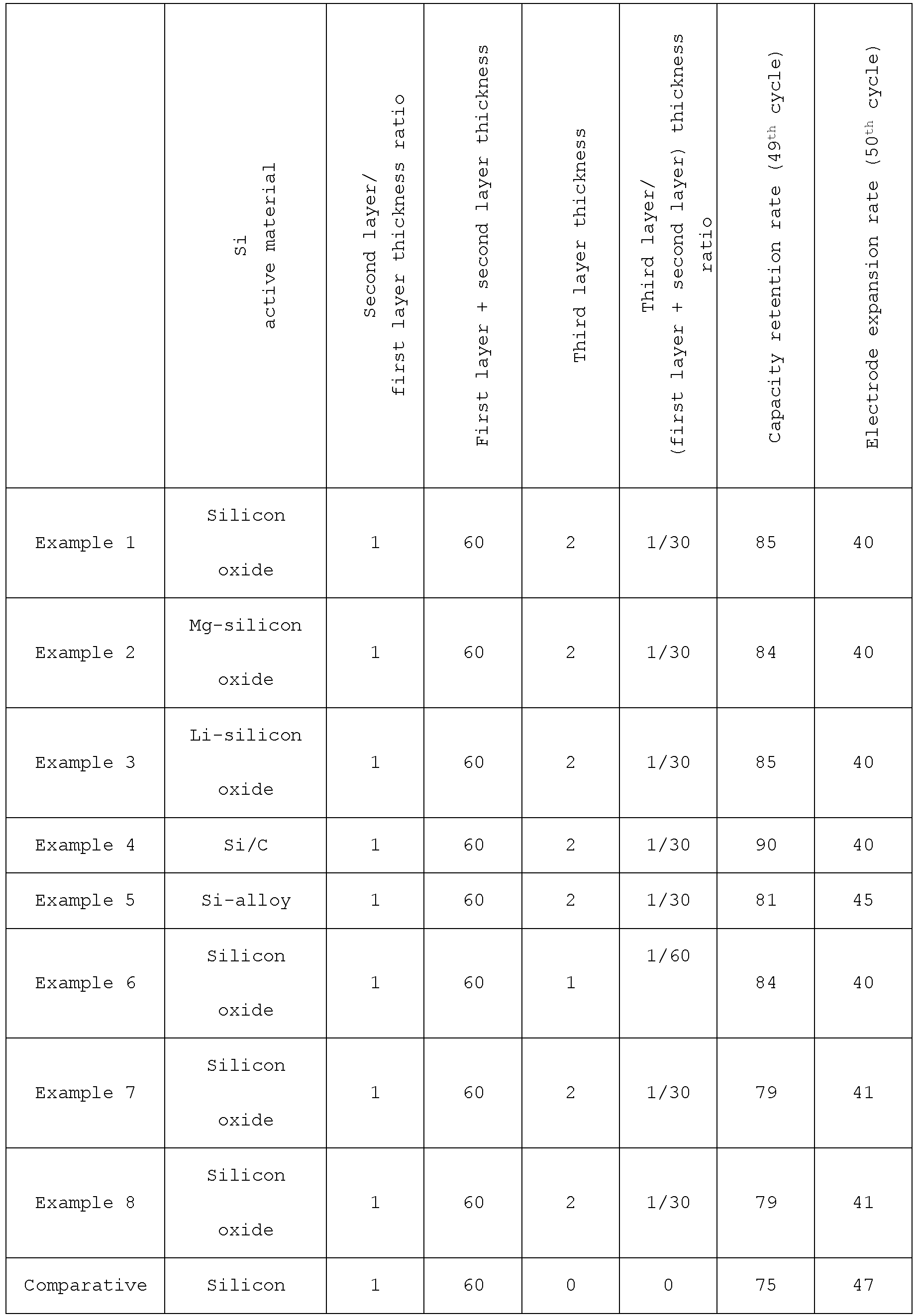

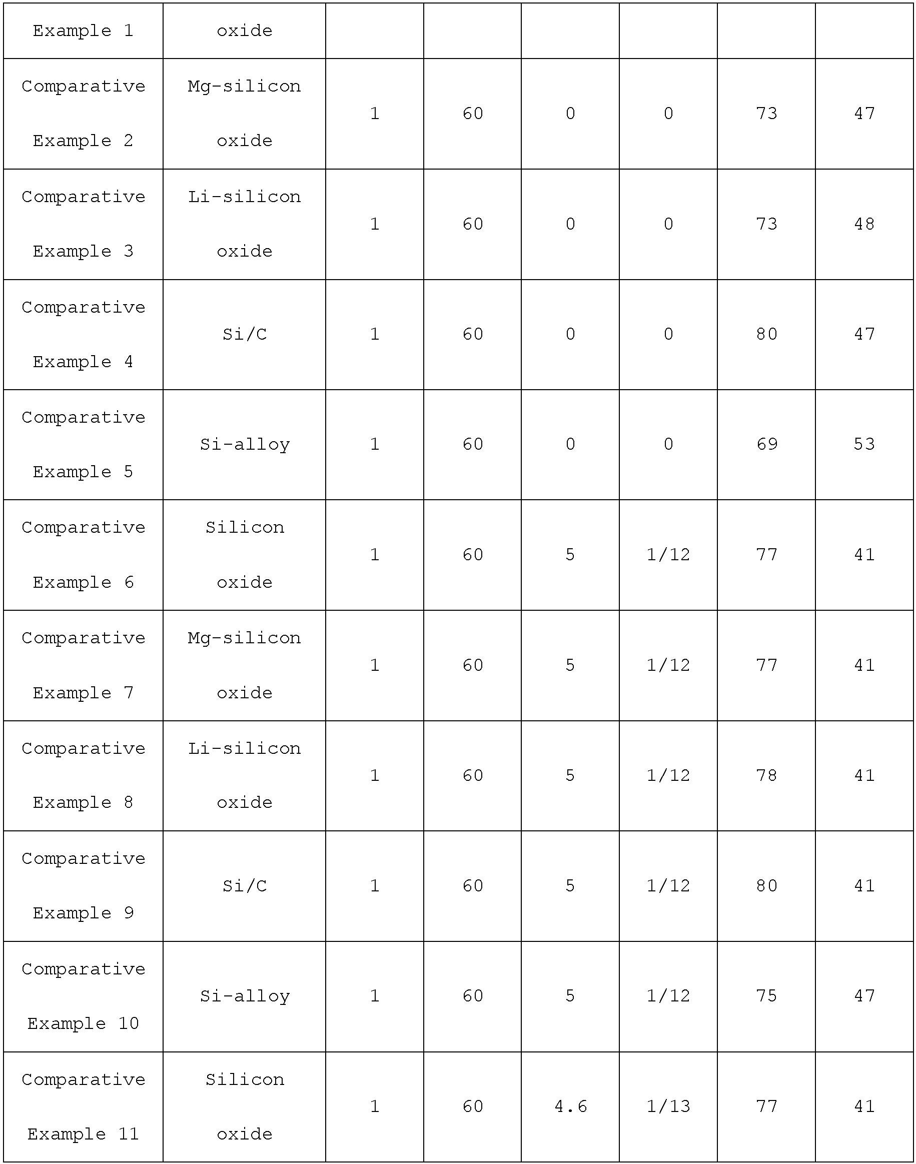

As shown in Table 1 above, it was confirmed that the batteries prepared in Examples 1 to 6, in which the thickness of the third layer was greater than 0 and equal to or less than 1/20 of the sum of the thicknesses of the first and second layers, had significantly higher capacity retention rates and significantly reduced electrode expansion rates compared to Comparative Examples 1 to 5 in which the third layer was not formed. In addition, in Comparative Examples 6 to 11 in which the third layer was formed thicker than in the above-described Examples, the electrode expansion rate was reduced to some extent; however, despite the increased thickness of the third layer, the electrode expansion rate was relatively greater compared to the Examples in which the third layer was formed thinner. In addition, Comparative Examples 6 to 11 showed poor capacity retention rates because the thickness of the third layer was thick.

The battery prepared in Example 7, in which the silicon-based active material in the second layer was included by 50 parts by weight based on 100 parts by weight of the active material in the second layer, had a higher capacity retention rate than that of Comparative Example 1, but showed a lower capacity retention rate than that of Example 1, in which the silicon-based active material in the second layer was included by 0.4 to 40 parts by weight based on 100 parts by weight of the active material in the second layer.

In addition, the battery prepared in Example 8, in which the content of the aluminum-containing compound was 50 parts by weight based on 100 parts by weight of the third layer composition, had a higher capacity retention ratio than that of Comparative Example 1, but showed a lower capacity retention ratio than that of Example 1, in which the content of the aluminum-containing compound was 90 parts by weight based on 100 parts by weight of the third layer composition.

## Claims

1. A negative electrode for a lithium secondary battery, comprising:
a current collector;
a first layer comprising a carbon-based active material provided on the current collector;
a second layer provided on the first layer and comprising a silicon-based active material; and
a third layer provided on the second layer and comprising aluminum or an aluminum-containing compound,
wherein a thickness of the third layer is greater than 0 and equal to or less than 1/20 of a sum of thicknesses of the first and second layers.

2. The negative electrode for a lithium secondary battery of claim 1, wherein the carbon-based active material in the first layer is graphite.

3. The negative electrode for a lithium secondary battery of claim 1, wherein the carbon-based active material in the first layer is included in an amount of 80 to 100 parts by weight based on 100 parts by weight of an active material in the first layer.

4. The negative electrode for a lithium secondary battery of claim 1, wherein the silicon-based active material in the second layer comprises at least one of silicon (Si), a silicon oxide, a metal-doped silicon oxide, a silicon-carbon composite, and a silicon-metal alloy.

5. The negative electrode for a lithium secondary battery of claim 1, wherein the silicon-based active material in the second layer is included in an amount of 0.1 to 40 parts by weight based on 100 parts by weight of an active material in the second layer.

6. The negative electrode for a lithium secondary battery of claim 1, wherein the aluminum-containing compound in the third layer comprises at least one of an aluminum oxide and Al(OH)₃.

7. The negative electrode for a lithium secondary battery of claim 1, wherein a content of the aluminum or aluminum-containing compound in the third layer is 90 to 100 parts by weight based on 100 parts by weight of a composition of the third layer.

8. The negative electrode for a lithium secondary battery of claim 1, wherein the third layer is provided to cover the second layer partially or entirely.

9. The negative electrode for a lithium secondary battery of claim 1, wherein the first layer and the second layer each further comprise a binder and a conductive material.

10. A lithium secondary battery comprising:
the negative electrode of any one of claims 1 to 9;
a separator; and
a positive electrode,
wherein the third layer of the negative electrode is provided facing the separator.

11. The lithium secondary battery of claim 10, wherein the separator is a safety reinforced separator (SRS).

12. A battery module comprising the lithium secondary battery of claim 11.

13. A battery pack comprising the lithium secondary battery of claim 11.

14. A battery pack comprising the battery module of claim 12.
